# EUROPÄISCHE PATENTANMELDUNG

(11) **EP 2 098 407 A2**
(43) Veröffentlichungstag der Anmeldung: **09.09.2009**
(21) Anmeldenummer: 09002245.0
(22) Anmeldetag: 18.02.2009
(51) Int. Cl.: B60N 2/52

(54) **Fahrzeugsitz, insbesondere Nutzfahrzeugsitz**

(30) Priorität: 07.03.2008 DE 102008013794
(71) Anmelder: KEIPER GmbH & Co. KG, 67657 Kaiserslautern (DE)
(72) Erfinder: Niroba, Christof, 67663 Kaiserslautern (DE); Weber, Thomas, 67659 Kaiserslautern (DE)
(74) Vertreter: Patentanwälte Hosenthien-Held und Dr. Held

(57) **Zusammenfassung**

Bei einem Fahrzeugsitz, insbesondere Nutzfahrzeugsitz, mit einem Scherengestell, welches schwingfähig und höheneinstellbar ist, mit einer Gasfeder und wenigstens einem Paar von Schwingen, welche sich an einer Scherenachse kreuzen, und einer Steuereinrichtung (20) zur Niveauregulierung und zur Höheneinstellung des Scherengestells, welche eine Ventileinrichtung (24) mit Ventilen zur Ansteuerung der Gasfeder, eine Steuerkulisse (26) und wenigstes ein Tastorgan (30) zum Abtasten der Steuerkulisse (26) aufweist, wobei die Steuerkulisse (26) und das Tastorgan (30) verschiedenen, relativ zu einander beweglichen Teilen des Scherengestells zugeordnet sind, sind die Steuerkulisse (26) und die Ventileinrichtung (24) einer ersten Schwinge (8a) und das Tastorgan (30) einer zweiten Schwinge (8b) zugeordnet, und die Steuerkulisse (26) ist schwenkbar und zur Betätigung der Ventileinrichtung (24) angeordnet.

## Beschreibung

Die Erfindung betrifft einen Fahrzeugsitz, insbesondere Nutzfahrzeugsitz, mit den Merkmalen des Oberbegriffs des Anspruches 1.

Bekannte Fahrzeugsitze dieser Art sind beispielsweise in der DE 28 49 700 A1, der DE 33 33 604 A1, der DE 43 35 199 C1 oder der DE 10 2006 017 774 A1 beschrieben. Für die Niveauregulierung ist jeweils ein Regelkreis vorgesehen, welcher aus dem Scherengestell, der Gasfeder und der Steuereinrichtung samt Tastorgan, Steuerkulisse und Ventileinrichtung besteht. Weicht der Istwert der Höhe vom Sollwert ab, in der Regel aufgrund einer Auslenkung des Sitzgestells, wird die Gasfeder so angesteuert, dass sie der Auslenkung entgegenwirkt, und der Istwert wieder den Sollwert erreicht. Für die Höheneinstellung wird in Abhängigkeit der neu einzustellenden Höhe der Sollwert geändert, so dass die Niveauregulierung den aktuellen Istwert als Abweichung vom Sollwert behandelt und das Scherengestell in die gewünschte neue Höhe bringt. Bei der technischen Umsetzung zeigen die bekannten Fahrzeugsitze einen teilweise komplizierten Aufbau. Zudem wäre eine Erhöhung der Genauigkeit der Niveauregulierung und der Höheneinstellung wünschenswert.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Die kinematische Zuordnung der Steuerkulisse und der Ventileinrichtung zu einer ersten Schwinge und des Tastorgans zu einer zweiten Schwinge erhöht gegenüber anderen möglichen Zuordnungen zu Teilen des Scherengestells, beispielsweise zu den Rahmen, die erfassbare Auslenkung bei der Schwingung des Scherengestells und damit die Messgenauigkeit des Istwertes der Höhe, was letztendlich sowohl die Niveauregulierung als auch die Höheneinstellung verbessert. Dabei soll unter der kinemtischen Zuordnung verstanden werden, dass die einander kinematisch zugeordneten Bauteile sich zusammen bewegen, also eine kinematische Einheit bilden oder Baugruppe bilden, was durch feste Verbindungen oder kraftschlüssige Kopplungen erreicht werden kann. Gegenüber einer Zuordnung von Steuerkulisse und Ventileinrichtung zu verschiedenen Schwingen besteht mit der erfindungsgemäßen Lösung der Vorteil, dass die an der Ventileinrichtung angeordnete Steuerkulisse als Hebel dienen kann, wenn eine Schwenkbewegung der Steuerkulisse in eine Betätigung der Ventileinrichtung umzusetzen ist.

Für eine platzsparende Anordnung der Steuereinrichtung ist vorzugsweise eine Brücke zwischen der Scherenachse und einer Lagerachse der ersten Schwinge vorgesehen, welche mittels vorzugsweise jeweils eines Mauls eine der Achse aufnehmen kann, insbesondere unter Bildung einer Clipsverbindung. An dieser Brücke, beispielsweise an einem Gehäuse zur Aufnahme der Ventileinrichtung, kann dann die Steuerkulisse angelenkt sein.

Die Steuerkulisse ist vorzugsweise schmetterlingsartig ausgebildet, d.h. sie weist einen Mittelbereich zur schwenkbaren Anlenkung (und vorzugsweise zur Betätigung der Ventileinrichtung) und zwei vom Mittelbereich abstehende (vorzugsweise auf der von der Ventileinrichtung abgewandten Seite) Flügelbereiche auf, welche dann bei der Schwenkbewegung der Steuerkulisse als Hebel wirken. Die drei Bereichen definieren vorzugsweise zwischen sich eine konkave Steuerfläche, welche mittels des Tastorgans abtastbar ist. Passend zu den zwei Flügelbereichen sind vorzugsweise auch zwei Tastorgane vorgesehen. Die Ventileinrichtung ist nicht auf einen Ventiltyp beschränkt. Eine gute Abdichtung zeigen beispielsweise Schieberventile.

Für den oder die Taster ist vorzugsweise ein Träger vorgesehen, welcher drehbar und reibschlüssig gesichert auf der Scherenachse sitzt, wobei eine Drehung um die Scherenachse, beispielsweise mittels eines Seilzuges und/oder einer Rückstellfeder, den Sollwert der Höhe ändert, was mittels der Niveauregulierung zur Höheneinstellung führt.

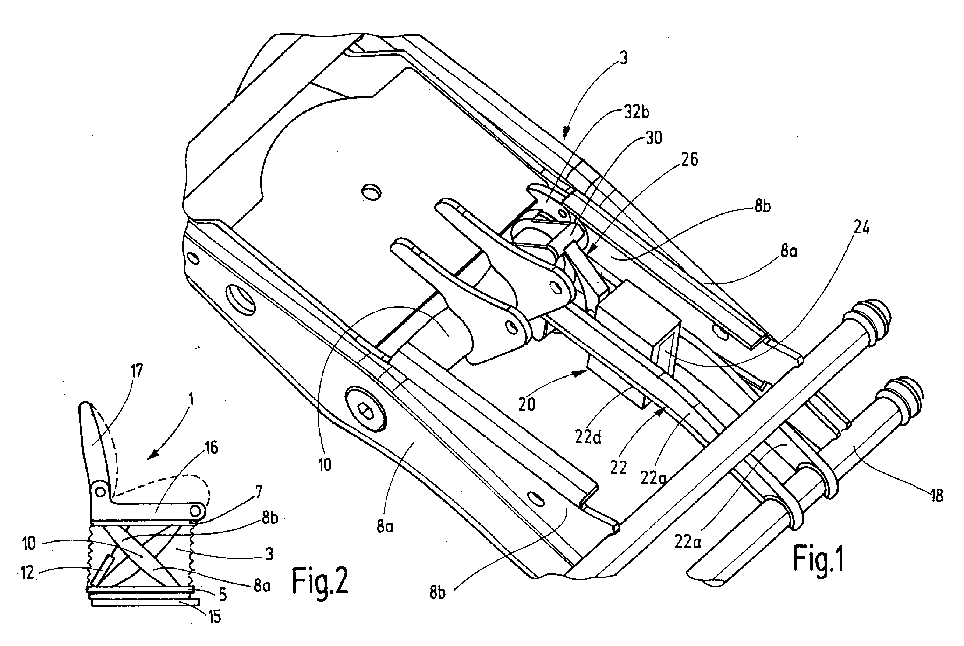

Im folgenden ist die Erfindung anhand eines in der Zeichnung dargestellten Ausführungsbeispiels näher erläutert. Es zeigen
- Fig. 1: eine perspektivische Teilansicht des Ausführungsbeispiels im Bereich des Scherengestells mit einer Steuereinrichtung,
- Fig. 2: eine schematische Darstellung des Ausführungsbeispiels,

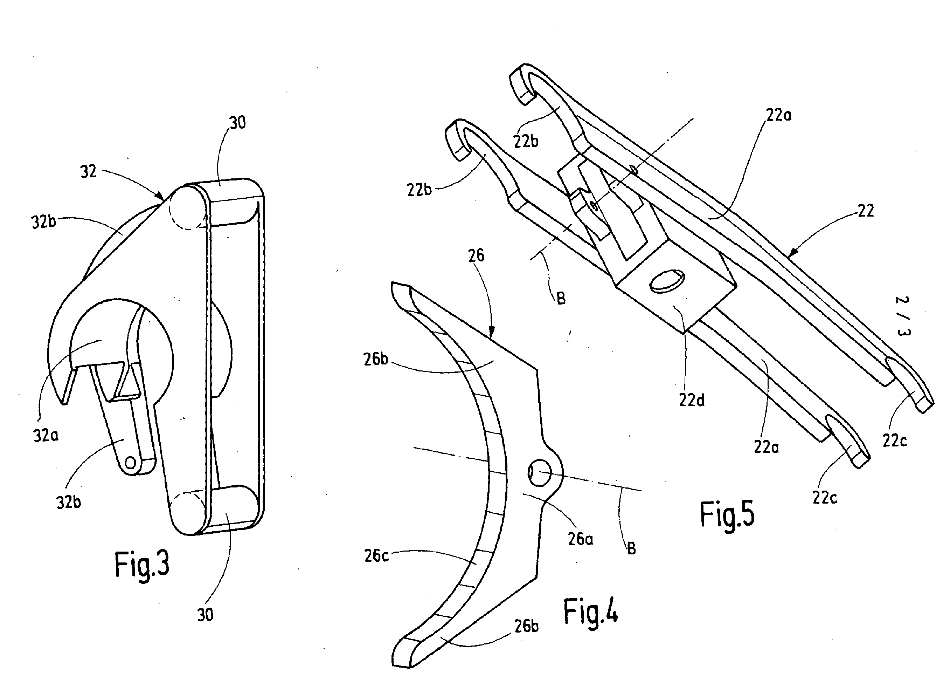

- Fig. 3: ein Träger mit zwei Tastorganen der Steuereinrichtung,
- Fig. 4: eine Steuerkulisse der Steuereinrichtung,
- Fig. 5: eine Brücke der Steuereinrichtung,
- Fig. 6: eine Seitenansicht der Steuereinrichtung beim Belüften der Gasfeder, und
- Fig. 7: eine Seitenansicht der Steuereinrichtung beim Entlüften der Gasfeder.

Ein Fahrzeugsitz 1 für ein Nutzfahrzeug oder ein anderes Kraftfahrzeug weist ein Scherengestell 3 auf, welches einen Unterrahmen 5, einen oberhalb desselben angeordneten Oberrrahmen 7 und beidseitig je ein Paar gekreuzter Schwingen 8a und 8b umfasst. Eine Scherenachse 10 verbindet die beiden Kreuzungspunkte und definiert zugleich die Achse, um welche die Schwingen 8a und 8b relativ zueinander schwenken können. Die Schwingen 8a und 8b sind jeweils an ihrem hinteren Ende am Unterrahmen 5 bzw. am Oberrahmen 7 angelenkt und weisen jeweils an ihrem vorderen Ende drehbare Rollen auf, mittels denen sie im oder am Oberrahmen 7 bzw. Unterrahmen 5 in Sitzlängsrichtung beweglich geführt sind. Durch diese Bewegung der Schwingen 8a und 8b ändert sich die Höhe des Oberrahmens 7 über dem Unterrahmen 5, im folgenden kurz als Höhe des Scherengestells 3 bezeichnet. Mittels einer Gasfeder 12 und vorzugsweise einem Dämpfer wird das Scherengestell 3 ein schwingfähiges System, welches den Sitzkomfort erhöht.

Das Scherengestell 3 ist vorliegend mittels Sitzschienen 15 in Sitzlängsrichtung verschiebbar, womit der Fahrzeugsitz 1 längseinstellbar ist, d.h. seine Sitzlängsposition einstellbar ist. Der Fahrzeugsitz 1 weist ferner einen Sitzrahmen 16 auf, welcher einerseits in seinem hinteren Bereich am Oberrahmen 7 beidseitig angelenkt ist und andererseits in seinem vorderen Bereich mittels eines Neigungseinstellers anhebbar und absenkbar und damit in seiner Neigung relativ zum Scherengestell 3 einstellbar ist. Der Fahrzeugsitz 1 weist noch eine Lehne 17 auf, welche am Sitzrahmen 16 (oder alternativ am Oberrahmen 7) - vorliegend neigungseinstellbar - angebracht ist.

Die beiden Paare gekreuzter Schwingen 8a und 8b umfassen jeweils eine erste Schwinge 8a, welche außen angeordnet ist, und eine zweite Schwinge 8b, welche innen angeordnet ist. Die beiden ersten Schwingen 8a sind an ihrem einen, vorliegend dem vorderen, unteren Ende miteinander fest verbunden mittels einer als Rohr ausgebildeten Lagerachse 18, welche zugleich die Rollen lagert. Die beiden zweiten Schwingen 8b sind miteinander fest verbunden mittels der ebenfalls als Rohr ausgebildeten Scherenachse 10. Ferner sind die anderen Ende der einander entsprechenden Schwingen 8a oder 8b mittels weiterer Querrohre fest miteinander verbunden.

Eine Steuereinrichtung 20 dient sowohl zur Niveauregulierung, d.h. einer Beibehaltung der eingestellten Höhe des Scherengestells 3 während des Fahrbetriebs, als auch zur Höheneinstellung des Scherengestells 3.

Die Steuereinrichtung 20 weist eine Brücke 22 auf, die vorliegend doppelt mit zwei zueinander parallelen, gleichartigen Brückenteilen 22a, die untereinander verbunden sind, und beispielsweise aus Kunststoff bestehen. Die Brücke 22 ist einerseits drehbar an der Scherenachse 10 angebracht, vorliegend mittels jeweils eines gabelförmigen ersten Mauls 22b, und andererseits an der Lagerachse 18 angebracht, vorliegend mitttels jeweils eines ebenfalls gabelförmigen zweiten Mauls 22c. Die Mäuler 22b und 22c können etwas mehr als 180° umgreifen, so dass aufgrund der Elastizität des Materials der Brücke 22 eine Clipsverbindung entsteht. Die Brücke 22 ist somit kinematisch den ersten Schwingen 8a zugeordnet und an diesen befestigt. An der Brücke 22, vorliegend in einem als Verbindung zwischen den beiden Brückenteile 22a dienenden Gehäuse 22d, ist eine Ventileinrichtung 24 befestigt, die zwei Ventile zur Ansteuerung der Gasfeder 12 aufweist, nämlich ein Einlassventil und ein Auslassventil. Als Ventiltypen kommen sogenannte Sitzventile oder Schieberventile in Frage.

Zur Betätigung der Ventile weist die Steuereinrichtung 20 eine schmetterlingsartig ausgebildete Steuerkulisse 26 auf, die vor der Ventileinrichtung 24 an der Brücke 22, bzw. dem als Verbindung dienenden Gehäuse 22d für die Ventileinrichtung 24, angelenkt ist, und zwar mit einer zur Scherenachse 10 parallele Schwenkachse B. Die Steuerkulisse 26 betätigt durch Schwenken die Ventileinrichtung 24, d.h. deren Ventile, beispielsweise durch Beaufschlagung von Stößeln, die aus der Ventileinrichtung 24 herausragen. Die schmetterlingsartige Ausbildung der Steuerkulisse 26 ist so zu verstehen, dass die Steuerkulisse 26 ausgehend von einem Mittelbereich 26a, der auch die Anlenkstelle mit der Schwenkachse B aufweist und die Ventileinrichtung 24 betätigt, zwei abstehende Flügelbereiche 26b aufweist, die auf der von der Ventileinrichtung 24 abgewandten Seite vom Mittelbereich 26a abstehen, wobei alle drei Bereiche 26a und 26b in der gleichen Ebene (senkrecht zur Scherenachse 10) liegen und zwischen sich eine konkave Steuerfläche 26c definieren.

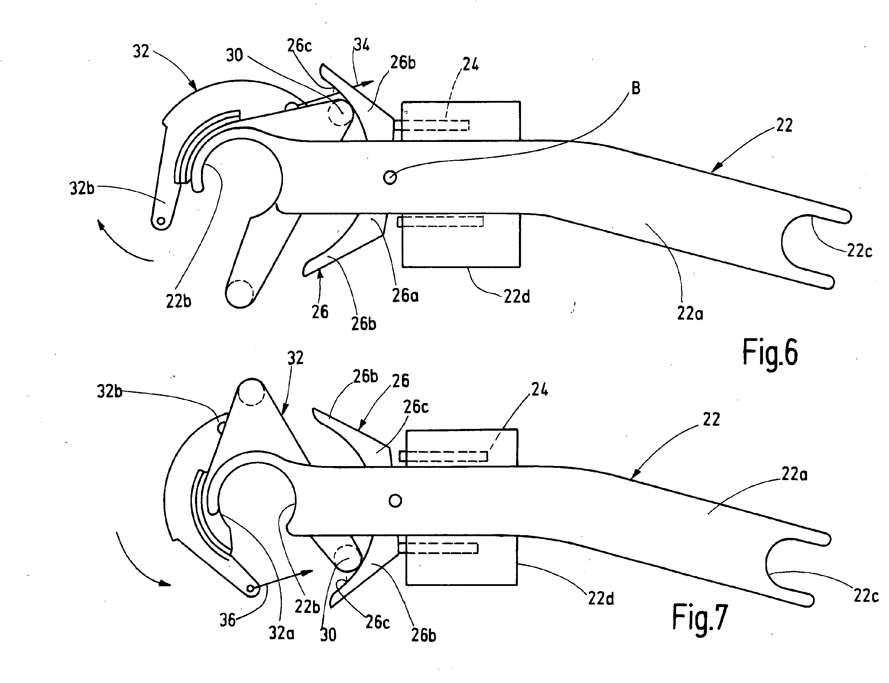

Zum Zusammenwirken mit der Steuerkulisse 26, genauer gesagt mit deren Steuerfläche 26c, weist die Steuereinrichtung 20 zwei - vorliegend bolzenartig ausgebildete - Tastorgane 30 auf, welche auf einem Träger 32 sitzen. Vorliegend weist der Träger 32 zwei parallele Platten auf, zwischen denen die Tastorgane 30 angeordnet sind. Der gesamte Träger 32 besteht beispielsweise aus Kunststoff. Die Tastorgane 30 können einstückig mit dem Träger 32 ausgebildet sein. Die Tastorgane 30 können an der Steuerkulisse 26, d.h. deren Steuerfläche 26c, entlang gleiten. Hierzu sitzt der Träger 32 drehbar auf der Scherenachse 10, wobei vorzugsweise möglichst wenig Reibung vorgesehen ist, und ist - auf eine nachfolgend beschriebene Weise - kraftschlüssig mit den zweiten Schwingen 8b gekoppelt. Vorliegend weist der Träger 32 ein drittes Maul 32a auf, welches entsprechend dem ersten Maul 22b der Brücke 22 die Scherenachse 10 aufnimmt, vorzugsweise etwas mehr als 180° umgreift, so dass aufgrund der Elastizität des Materials des Trägers 32 eine Clipsverbindung entsteht. Somit sind die Tastorgane 30 kinematisch den zweiten Schwingen 8b zugeordnet. Die beiden Tastorgane 30 sind mit ihrer bolzenartigen Form so angeordnet, dass sie parallel zur Scherenachse 10 ausgerichtet sind, also die Steuerfläche 26c mit ihrer Mantelfläche abtasten. Der Träger 32 kann mittels eines Seilzuges 34 (angedeutet in Fig. 6), beispielsweise eines Bowdenzuges, um die Scherenachse 10 gedreht werden. Für die Rückstellung ist der Seilzug geschlossen, oder es ist eine Rückstellfeder 36 (angedeutet in Fig. 7) vorgesehen. Der Träger 32 weist entsprechende Befestigungsarme 32b auf. Eine Abstützung des Seilzuges 34 an der räumlich nächstgelegenen zweiten Schwinge 8b und die Einhängung des anderen Endes der Rückstellfeder 36 an besagter zweiten Schwinge 8b ergebe die gewünschte kraftschlüssige Kopplung an die zweiten Schwingen 8b, also die kinematische Zuordnung.

Von den beiden Funktionen der Steuereinrichtung 20 wirkt die Niveauregulierung im Gebrauch des Fahrzeugsitzes 1 wie folgt: Auslenkungen des schwingfähigen Scherengestells 3, beispielsweise aufgrund von Fahrbahnunebenheiten, führen dazu, dass die Scheren 8a und 8b relativ zueinander schwenken. Damit fährt (je nach Schwenkrichtung) eines der Tastorgane 30 an der Steuerkulisse 26 entlang, worauf diese um die Schwenkachse B schwenkt und die Ventileinrichtung 24 betätigt. Je nach Richtung wird entweder mittels des Einlassventils die Gasfeder 12 belüftet oder mittels des Auslassventils die Gasfeder 12 entlüftet. Dies wirkt dann der Auslenkung entgegen. Die Scheren 8a und 8b, die Steuereinrichtung 20 und die Gasfeder 12 bilden einen Regelkreis, d.h. das Scherengestell 3 auf die eingestellte Höhe als Sollwert regelt.

Die andere Funktion der Steuereinrichtung 20, also die Höheneinstellung, wirkt wie folgt: eine Verdrehung des Trägers 32 fährt (je nach Drehrichtung) eines der Tastorgane 30 an der Steuerkulisse 26 entlang. Dies wirkt sich genauso aus, als ob die Scheren 8a und 8b relativ zueinander schwenken würden, d.h. die Ventileinrichtung 24 wird betätigt, um der vermeintlichen Auslenkung entgegen zu wirken. Der Regelkreis regelt nun auf die neu eingestellte Höhe als Sollwert.

### Bezugszeichenliste

- 1: Fahrzeugsitz
- 3: Scherengestell
- 5: Unterrahmen
- 7: Oberrahmen
- 8a: erste Schwinge
- 8b: zweite Schwinge
- 10: Scherenachse
- 12: Gasfeder
- 15: Sitzschiene
- 16: Sitzrahmen
- 17: Lehne
- 18: Lagerachse
- 20: Steuereinrichtung
- 22: Brücke
- 22a: Brückenteil
- 22b: erstes Maul
- 22c: zweites Maul
- 22d: Gehäuse
- 24: Ventileinrichtung
- 26: Steuerkulisse
- 26a: Mittelbereich
- 26b: Flügelbereiche
- 26c: Steuerfläche
- 30: Tastorgan
- 32: Träger
- 32a: drittes Maul
- 32b: Befestigungsarm
- 34: Seilzug
- 36: Rückstellfeder
- B: Schwenkachse

## Patentansprüche

1. Fahrzeugsitz, insbesondere Nutzfahrzeugsitz, mit
a) einem Scherengestell (3), welches schwingfähig und höheneinstellbar ist, mit einer Gasfeder (12) und wenigstens einem Paar von Schwingen (8a, 8b), welche sich an einer Scherenachse (10) kreuzen, und
b) einer Steuereinrichtung (20) zur Niveauregulierung und zur Höheneinstellung des Scherengestells (3), welche eine Ventileinrichtung (24) mit Ventilen zur Ansteuerung der Gasfeder (12), eine Steuerkulisse (26) und wenigstes ein Tastorgan (30) zum Abtasten der Steuerkulisse (26) aufweist, wobei die Steuerkulisse (26) und das Tastorgan (30) verschiedenen, relativ zu einander beweglichen Teilen des Scherengestells (3) kinematisch zugeordnet sind,
**dadurch gekennzeichnet, dass**
c) die Steuerkulisse (26) und die Ventileinrichtung (24) einer ersten Schwinge (8a) und das Tastorgan (30) einer zweiten Schwinge (8b) kinematisch zugeordnet sind, und
d) die Steuerkulisse (26) um eine Schwenkachse (B) schwenkbar und zur Betätigung der Ventileinrichtung (24) angeordnet ist.

2. Fahrzeugsitz nach Anspruch 1, **dadurch gekennzeichnet, dass** die Steuereinrichtung (20) eine Brücke (22) zwischen der Scherenachse (10) und einer Lagerachse (18) der ersten Schwinge (8a) aufweist.

3. Fahrzeugsitz nach Anspruch 2, **dadurch gekennzeichnet, dass** die Brücke (22) wenigstens ein Maul (22b, 22c) aufweist zur Aufnahme der Scherenachse (10) und/oder der Lagerachse (18), insbesondere unter Bildung einer Clipsverbindung.

4. Fahrzeugsitz nach einem der vorhergehenden Ansprüche, **dadurch gekennzeichnet, dass** die Steuerkulisse (26) an einem Gehäuse (22d) zur Aufnahme der Ventileinrichtung (24) angelenkt ist, welches insbesondere der Brücke (22) zugeordnet ist.

5. Fahrzeugsitz nach einem der vorhergehenden Ansprüche, **dadurch gekennzeichnet, dass** die Steuerkulisse (26) einen Mittelbereich (26a) zur schwenkbaren Anlenkung und zwei davon abstehende Flügelbereiche (26b) aufweist, welche zwischen sich eine konkave Steuerfläche (26c) definieren.

6. Fahrzeugsitz nach Anspruch 5, **dadurch gekennzeichnet, dass** die Ventileinrichtung (24) mittels des Mittelbereichs (26a) der Steuerkulisse (26) betätigbar und/oder die Steuerfläche (26c) der Steuerkulisse (26) mittels des Tastorgans (30) abtastbar ist.

7. Fahrzeugsitz nach Anspruch 5 oder 6, **dadurch gekennzeichnet, dass** die Flügelbereiche (26b) auf der von der Ventileinrichtung (24) abgewandten Seite vom Mittelbereich (26a) abstehen.

8. Fahrzeugsitz nach einem der vorhergehenden Ansprüche, **dadurch gekennzeichnet, dass** zwei Tastorgane (30) vorgesehen sind.

9. Fahrzeugsitz nach einem der vorhergehenden Ansprüche, **dadurch gekennzeichnet, dass** die Ventileinrichtung (24) zwei Schieberventile oder Sitzventile aufweist.

10. Fahrzeugsitz nach einem der vorhergehenden Ansprüche, **dadurch gekennzeichnet, dass** der Taster (30) an einem Träger (32) vorgesehen ist, welcher drehbar auf der Scherenachse (10) sitzt.

11. Fahrzeugsitz nach Anspruch 10, **dadurch gekennzeichnet, dass** der Träger (32) mittels eines Seilzuges (34) und/oder einer Rückstellfeder (36) um die Scherenachse (10) drehbar ist und/oder kraftschlüssig an die zweite Schwinge (8b) gekoppelt ist.
